# EUROPÄISCHE PATENTSCHRIFT

(11) **EP 2 148 787 B1**
(45) Veröffentlichungstag und Bekanntmachung des Hinweises auf die Patenterteilung: **26.10.2011**
(21) Anmeldenummer: 08735323.1
(22) Anmeldetag: 18.04.2008
(51) Int. Cl.: B60J 10/00

(54) **DICHTUNGSSTRANG, INSBESONDERE ZUR ABDICHTUNG VON KLAPPEN UND TÜREN AN FAHRZEUGKAROSSERIEN**
SEALING THREAD, PARTICULARLY FOR SEALING HATCHES AND DOORS ON VEHICLE BODIES
BOURRELET D'ÉTANCHÉITÉ, EN PARTICULIER POUR GARNITURE D'ÉTANCHÉITÉ DE HAYONS ET DE PORTIÈRES SUR DES CARROSSERIES DE VÉHICULES

(30) Priorität: 25.04.2007 DE 102007019478
(43) Veröffentlichungstag der Anmeldung: 03.02.2010
(73) Patentinhaber: SaarGummi technologies S.à.r.l., 5445 Schengen (LU)
(72) Erfinder: HIRSL, Miroslav, 547 01 Nachod (CZ); FALK, Michael, 66636 Tholey/Überroth (DE); SEMERAK, Pavel, 54701 Nachod (CZ)
(74) Vertreter: Bernhardt, Reinold
(86) Internationale Anmeldenummer: PCT/EP2008/003128
(87) Internationale Veröffentlichungsnummer: WO 2008/131875

(56) Entgegenhaltungen:
- EP-A- 0 134 159
- DE-A1- 3 011 032
- DE-A1- 3 739 606
- DE-A1- 3 925 039
- DE-A1- 3 936 260
- DE-A1- 19 531 167

## Beschreibung

Die Erfindung betrifft einen Dichtungsstrang, insbesondere zur Abdichtung von Klappen und Türen an Fahrzeugkarosserien, mit einem Querschnittsbereich, der aus einer im Vergleich zum angrenzenden Strangmaterial weichen, plastisch verformbaren Dichtmasse besteht, durch Extrusion hergestellt und an einem eine U-Form aufweisenden, auf einen Karosserieflansch aufsteckbaren Befestigungsabschnitt angeordnet ist.

Insbesondere der Bereich, in welchem Dichtungsstränge mit einem Flansch einer Fahrzeugkarosserie, verbunden sind, kann eine solche (zusätzliche) Abdichtung erfordern, da ansonsten durch Kapillarwirkung an dieser Stelle Feuchtigkeit in einen durch die Dichtung abzudichtenden Innenraum eindringen kann.
Herkömmlich wurde die weiche Dichtmasse von Hand, z.B. durch Ausdrücken aus einer Tube, auf den Dichtungsstrang aufgebracht.

Nach dem Stand der Technik erfolgte das Anbringen der Dichtmasse, nachdem der Profilstrang das Extrusionswerkzeug verlassen hat, mit Hilfe einer Düse in einem Online- oder Offline-Prozess. In beiden Fällen sind zusätzliche Produktionseinrichtungen erfordertich.

Zum Anbringen der Dichtmasse an schwer zugänglichen Stellen, z.B. in einem hinterschnittenen Bereich oder einen U-Kanal, ist es, um die Zugänglichkeit für die Düse zu gewährleisten, oftmals notwendig, den Dichtungsstrang erst nach dem Anbringen der Dichtmasse in seiner endgültigen Querschnittsform herzustellen.

Dichtungsstränge, bei denen der durch die Dichtmasse gebildete Querschnittsbereich durch Co-Extrusion mit dem übrigen Dichtungsstrang hergestellt ist, gehen aus der DE 195 31 167, aus der EP-0134159 sowie der DE 3011032 hervor. Bei diesen bekannten Dichtungssträngen ist die plastisch verformbare Dichtmasse innerhalb der U-förmigen Befestigungsabschnitte derart angebracht, dass sie in dem U-förmigen Befestigungsabschnitt einen sicheren Halt findet.

Der Erfindung liegt die Aufgabe zugrunde, einen neuen Dichtungsstrang der eingangs erwähnten Art zu schaffen, der eine weiter erhöhte Dichtungssicherheit bietet.

Der diese Aufgabe lösende Dichtungsstrang nach der Erfindung ist **dadurch gekennzeichnet, dass** der Querschnittsbereich an einer über das freie Ende des einen U-Schenkels des Befestigungsabschnitts hinaus vorstehenden Verlängerung des anderen U-Schenkels angeordnet ist, damit der Querschnittsbereich am Fuß eines Flansches der Fahrzeugkarosserie zur Anlage kommt, oder dass der Querschnittsbereich einen gegen den Flansch vorstehenden Teil einer von einem der U-Schenkel des Befestigungsabschnitts vorstehenden Klemmlippe bildet.

Durch die erfindungsgemöße Anordnung der Dichtmasse lässt sich eine in jedem Fall sichere Sperrverbindung zwischen dem Karosserieflansch und dem Dichtungsstrang sicherstellen.

Vorteilhaft lässt sich der extrudierte Abschnitt aus weicher Dichtmasse bei kontinuierlicher Fertigung des gesamten Dichtungsstrangs in hoher Gleichmäßigkeit herstellen.

Während der extrudierte Abschnitt mit dem übrigen (extrudierten) Dichtungsstrang zusammengeführt und verbunden werden kann, ist der Abschnitt in der bevorzugten Ausführungsform der Erfindung online mit dem übrigen Dichtungsstrang mehrfach extrudiert. Vorteilhaft kann der Dichtmasseabschnitt in gewünschten Querschnittsformen an Stellen des Dichtungsstrangs erzeugt werden, die bei dem Verfahren nach dem Stand der Technik nicht oder nur mit zusätzlichem Aufwand (Nachbiegen) zugänglich wären.

Die Dichtmasse kann z.B. innerhalb eines U-förmigen, auf einen Karosserieflansch aufsteckbaren Befestigungsabschnitts des Dichtungsstrangs angeordnet sein, wobei sie z.B. zwischen zwei von einem der U-Schenkel des Befestigungsabschnitts vorstehenden Klemmlippen angeordnet ist.

Beim Anbringen an einen Dichtungsträger, z.B. Karosserieflansch, klebt die weiche, breit gequetschte Dichtmasse an dem Dichtungsträger an. Das Eindringen von Feuchtigkeit durch Kapillarwirkung ist damit ausgeschlossen oder zumindest erschwert.

Die Erfindung wird nachfolgend anhand von Ausführungsbeispielen und der beiliegenden, sich auf diese Ausführungsbeispiele beziehenden Zeichnungen näher erläutert.

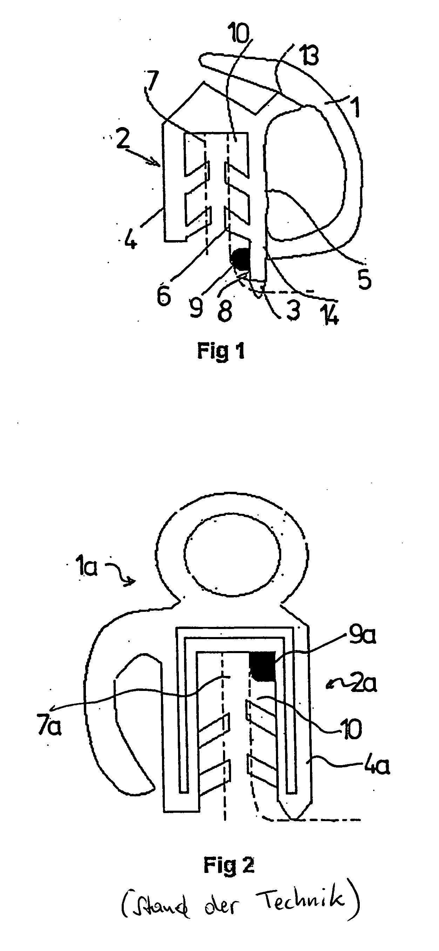

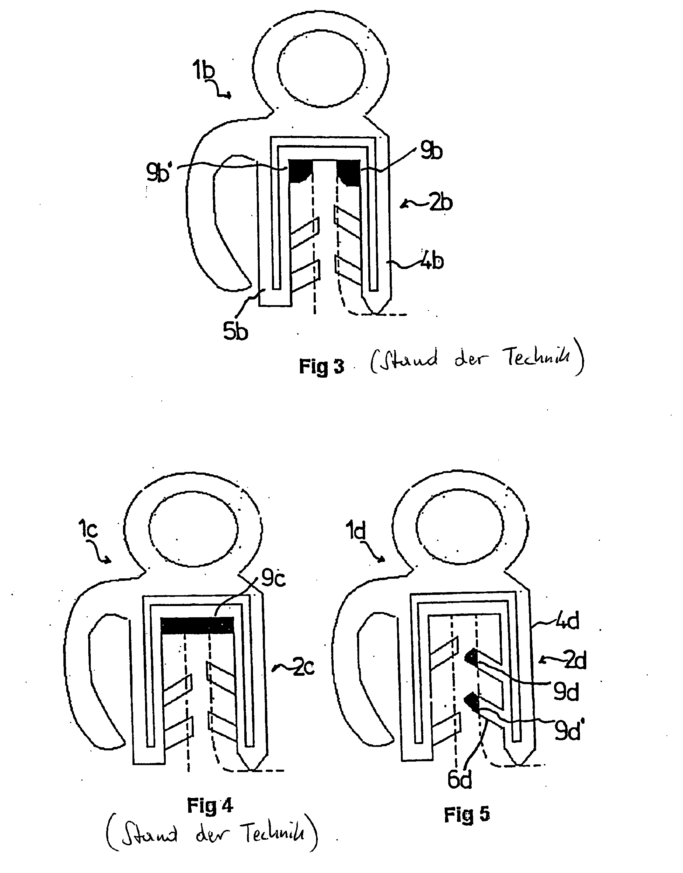

Die Fig. 1 und 5 zeigen jeweils ein Ausführungsbeispiel für einen Dichtungsstrang nach der Erfindung.

Ein in Fig. 1 im Querschnitt gezeigter Dichtungsstrang weist einen Dichtungsabschnitt 1 aus weichem Moosgummi und einen Befestigungsabschnitt 2 aus gegenüber dem Moosgummi härterem Elastomermaterial auf. Die Grenze zwischen den Abschnitten verläuft bei 13. An einen U-Schenkel 5 des U-förmig ausgebildeten Befestigungsabschnitts 2 schließt sich bei 14 ein weiterer Dichtungsabschnitt 3 aus Moosgummi an.

Von den U-Schenkeln 4 und 5 des Befestigungsabschnitts 2 stehen nach innen Klemmlippen 6 vor, zwischen welchen ein durch eine Strichlinie angedeuteter Korosserieflansch 7, der z.B. an einer Kofferraumklappe oder Türöffnung umläuft, einklemmbar ist.

Zwischen einer der Klemmlippen 6 und einer weiteren, am freien Ende des U-Schenkels 5 schräg vom U-Schenkel vorstehenden Klemmlippe 8 ist ein Abschnitt bzw. Querschnittsbereich 9 des Dichtungsstrangs vorgesehen, welcher in dem gezeigten Ausführungsbeispiel aus einer plastisch verformbaren Dichtmasse besteht und mit dem übrigen Dichtungsstrang mehrfach extrudiert ist.

Beim Aufstecken des Dichtungsstrangs auf den Flansch 7 kommt der Abschnitt 9 am Fuß des Flanschs zur Anlage gegen die Karosserie. Die dabei plastisch verformte Dichtmasse haftet an der Karosserie an und dichtet den zwischen dem Flansch 7 und der Innenseite des Befestigungsabschnitts 2 gebildeten Zwischenraum 10 ab, so dass das Eindringen von Feuchtigkeit um das freie Ende des Flansches 7 herum z.B. in einen Fahrzeugkofferraum erschwert oder ganz unterbunden wird.

Die Klemmlippen 6 und 8, zwischen denen die Dichtmasse angeordnet ist, hält die Dichtmasse andererseits zusammen und sorgt dafür, dass sie nicht zu breit gequetscht und in ihrer Wirkung beeinträchtigt wird. Eine gewisse Klebrigkeit der Dichtmasse wirkt sich positiv auf einen kapillardichten Abschluss des Zwischenraumes 10 aus.

Bei einem in Fig. 2 (Stand der Technik) im Querschnitt gezeigten Dichtungsstrang mit einem Dichtungsabschnitt 1 a und einem Befestigungsabschnitt 2a ist ein dem Abschnitt 9 entsprechender Abschnitt 9a am inneren Ende eines U-Schenkels 4a des Befestigungsabschnitts 2a angeordnet.

Beim Aufstecken des Befestigungsabschnitts 2a auf einen Karosserieflansch 7a kommt die Dichtungsmasse klebend zur Anlage gegen den Flansch und dichtet den Zwischenraum l0a zwischen dem Karosserieflansch 7a und der Innenseite des Befestigungsabschnitts gegen eindringende Feuchtigkeit ab.

Bei dem Ausführungsbeispiel von Fig. 3 (Stand der Technik) ist an den inneren Enden beider U-Schenkel 4b,5b eines U-förmigen Befestigungsabschnitts 2b jeweils ein Dichtmasseabschnitt 9b bzw. 9b' angeordnet.

Fig. 4 (Stand der Technik) zeigt einen Dichtungsstrang bei dem ein Dichtmasseabschnitt 9c innenseitig den gesamten Basisschenkel eines U-förmigen Befestigungsabschnitts 2c abdeckt.

Bei dem Ausführungsbeispiel von Fig. 5 weisen die Enden von Klemmlippen 6d einen Dichtmasseabschnitt 9d bzw. 9d' auf.

## Patentansprüche

1. Dichtungsstrang zur Abdichtung von Klappen an Fahrzeugkarosserien, mit einem Querschnittsbereich (9,9d), der aus einer im Vergleich zum angrenzenden Strangmaterial weichen, plastisch verformbaren Dichtmasse besteht, durch Extrusion hergestellt und an einem eine U-Form aufweisenden, auf einen Karosserieflansch (7) aufsteckbaren Befestigungsabschnitt (2,2d) angeordnet ist,
**dadurch gekennzeichnet,**
**dass** der Querschnittsbereich (9) an einer über das freie Ende des einen U-Schenkels (4) des Befestigungsabschnitts (2) hinaus vorstehenden Verlöngerung des anderen U-Schenkels (5) angeordnet ist, damit der Querschnittsbereich (9) am Fuß eines Flansches der Fahrzeugkarosserie zur Anlage kommt, oder dass der Querschnittsbereich (9d) einen gegen den Flansch vorstehenden Teil einer von einem der U-Schenkel des Befestigungsabschnitts (2d) vorstehenden Klemmlippe (6d) bildet.

2. Dichtungsstrang nach Anspruch 1,
**dadurch gekennzeichnet,**
**dass** die Dichtmasse klebend ist.

3. Dichtungsstrang nach Anspruch 1 oder 2,
**dadurch gekennzeichnet,**
**dass** der Querschnittsbereich (9) zwischen zwei von einem der U-Schenkel (5) des Befestigungsabschnitts (2) vorstehenden Klemmlippen (6,8) angeordnet ist.

4. Dichtungsstrang nach einem der Ansprüche 1 bis 3,
**dadurch gekennzeichnet,**
**dass** der Querschnittsbereich (9) mit dem übrigen Dichtungsstrang mehrfach extrudiert ist.

## Claims

1. Sealing strip for the sealing of closures of motor vehicle bodywork, with a cross-sectional region (9, 9d) which consists of a plastically deformable sealing material soft by comparison with the adjoining strip material and which is produced by extrusion and arranged on a fastening section (2, 2d) having a U-shape and pluggable onto a bodywork flange (7), **characterised in that** the cross-sectional region (9) is arranged at a prolongation, which protrudes beyond the free end of one U-limb (4) of the fastening section (2), of the other U-limb (5) so that the cross-sectional region (9) comes into contact with the foot of a flange of the vehicle bodywork or that the cross-sectional region (9d) forms a part, which protrudes towards the flange of a clamping lip (60) protruding from one of the U-limbs of the fastening section (2d).

2. Sealing strip according to claim 1, **characterised in that** the sealing material is adhesive.

3. Sealing strip according to claim 1 or 2, **characterised in that** the cross-sectional region (9) is arranged between two clamping lips (6, 8) protruding from one of the U-limbs (5) of the fastening section (2).

4. Sealing strip according to any one of claims 1 to 3, **characterised in that** the cross-sectional region (9) is multiply extruded with the rest of the sealing strip.

## Revendications

1. Bourrelet d'étanchéité pour rendre étanche des fermetures à des carrosseries de véhicule, avec une zone de section transversale (9, 9d) qui est constituée d'une masse d'étanchéité qui est molle en comparaison avec un matériau de bourrelet avoisinant, est plastiquement déformable, est fabriquée par extrusion et est disposée à une section de fixation (2, 2d) présentant une forme en U, pouvant être enclenchée sur une bride de carrosserie (7), **caractérisé en ce que** la zone en section transversale (9) est disposée à un prolongement de l'autre branche en U (5) faisant saillie sur l'extrémité libre d'une branche en U (4) de la section de fixation (2), pour que la zone en section transversale (9) s'applique à la base d'une bride de la carrosserie de véhicule, ou **en ce que** la zone en section transversale (9d) forme une partie en saillie contre la bride d'une lèvre de serrage (6d) faisant saillie d'une des branches en U de la section de fixation (2d).

2. Bourrelet d'étanchéité selon la revendication 1, **caractérisé en ce que** la masse d'étanchéité est collante.

3. Bourrelet d'étanchéité selon la revendication 1 ou 2, **caractérisé en ce que** la zone en section transversale (9) est disposée entre deux lèvres de serrage (6, 8) faisant saillie d'une des branches en U(5) de la section de fixation (2).

4. Bourrelet d'étanchéité selon l'une des revendications 1 à 3, **caractérisé en ce que** la zone en section transversale (9) avec le bourrelet d'étanchéité restant est extrudée plusieurs fois.
